# EUROPEAN PATENT APPLICATION

(11) **EP 4 113 949 A1**
(43) Date of publication of application: **04.01.2023**
(21) Application number: 22182284.4
(22) Date of filing: 30.06.2022
(51) Int. Cl.: H04L 45/121, H04L 43/0852, H04L 45/12, H04L 45/00

(54) **USING NETWORK INTERFACE CARDS HAVING PROCESSING UNITS TO DETERMINE LATENCY**

(30) Priority: 30.06.2021 IN 202141029411; 14.06.2022 US 202217806865
(71) Applicant: Juniper Networks, Inc., Sunnyvale, CA 94089 (US)
(72) Inventor: KOMMULA, Raja, Sunnyvale, 94089 (US); SRIDHAR, Thayumanavan, Sunnyvale, 94089 (US); MARIAPPAN, Yuvaraja, Sunnyvale, 94089 (US); N, Kiran K, Sunnyvale, 94089 (US); YAVATKAR, Raj, Sunnyvale, 94089 (US)
(74) Representative: D Young & Co LLP

(57) **Abstract**

A system is configured to compute a latency between a first computing device and a second computing device. The system includes a network interface card (NIC) of a first computing device. The NIC includes a set of interfaces configured to receive one or more packets and send one or more packets. The processing unit is configured to identify information indicative of a forward packet, compute, based on a first time corresponding to the forward packet and a second time corresponding to a reverse packet associated with the forward packet, a latency between the first computing device and a second computing device, wherein the second computing device includes a destination of the forward packet and a source of the reverse packet, and output information indicative of the latency between the first computing device and the second computing device.

## Description

This application claims the benefit of US Patent Application No. 17/806,865, filed June 14, 2022, which claims the benefit of IN Provisional Patent Application No. 202141029411, filed June 30, 2021. The entire content of each of these applications is incorporated herein by reference.

### TECHNICAL FIELD

The disclosure relates to computer networks.

### BACKGROUND

In a typical cloud data center environment, there is a large collection of interconnected servers that provide computing and/or storage capacity to run various applications. For example, a data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

The connectivity between the server and the switch fabric occurs at a hardware module called the Network Interface Card (NIC). A conventional NIC includes an application-specific integrated circuit (ASIC) to perform packet forwarding, which includes some basic Layer 2/Layer 3 (L2/L3) functionality. In conventional NICs, the packet processing, policing and other advanced functionality, known as the "datapath," is performed by the host central processing unit (CPU), i.e., the CPU of the server that includes the NIC. As a result, the CPU resources in the server are shared by applications running on that server and also by datapath processing. For example, in a 4 core x86 server, one of the cores may be reserved for the datapath, leaving 3 cores (or 75% of CPU) for applications and the host operating system.

Some NIC vendors have begun including an additional processing unit in the NIC itself to offload at least some of the datapath processing from the host CPU to the NIC. The processing unit in the NIC may be, e.g., a multi-core ARM processor with some programmable hardware acceleration provided by a Data Processing Unit (DPU), Field Programmable Gate Array (FPGA), and/or an ASIC. NICs that include such augmented processing power are typically referred to as SmartNICs.

### SUMMARY

Particular embodiments are set out in the independent claims. Various optional examples are set out in the dependent claims. In general, techniques are described for an edge services platform that leverages processing units of SmartNICs to augment the processing and networking functionality of a network of servers that include the SmartNICs. Features provided by the edge services platform may include orchestration of NICs; application programming interface (API)-driven deployment of services on NICs; NIC addition, deletion and replacement; monitoring of services and other resources on NICs; and management of connectivity between various services running on the NICs.

A network may include a plurality of servers, where packets travel throughout the network between one or more pairs of the plurality of servers. An amount of time that it takes for a packet to make a round trip between two servers of the plurality of servers defines a latency between the two servers. It may be beneficial to determine latencies between one or more pairs of servers, so that a controller can monitor a performance of the network. Existing techniques for latency measurement and monitoring include Pingmesh, which is a program for determining and displaying the latency between any two servers in a data center using a mesh visualization. Pingmesh creates such diagrams by causing each server to send periodic "pings," i.e., Internet Control Message Protocol (ICMP) echo requests to every other server, which then respond immediately with an ICMP echo reply. Pingmesh can alternatively use Transmission Control Protocol (TCP) and HyperText Transfer Protocol (HTTP) pings. Pingmesh collects the latency information based on the ping request/reply round trip times and uses it to generate a mesh visualization.

As described in further detail herein, a processing unit of a NIC may execute an agent that determines a latency between the device hosting the NIC and another device. In determining the latency, the processing unit of the NIC uses few or no computing resources of the host device, such as the host CPU and memory, relative to existing techniques such as Pingmesh that rely on host-generated ping request/replies. In some examples, the agent executing on the NIC processing unit may determine latencies by snooping data or control traffic generated and received the host device and passing through the data path on the NIC. For example, the agent may detect a forward packet for a forward packet flow and a reverse packet for a reverse packet flow, generate obtain timestamp information for the forward packet and the reverse packet, and compute a round trip time from the timestamp information to determine latency between the source device and destination device of the forward and reverse packet flows. The agent may perform a similar process with respect to Address Resolution Protocol (ARP) request/reply. In this way, the agent may determine latency without either the agent or the host having to separately generate send ping requests or responses to the other device for the purpose of latency measurement. The agent may instead snoop on existing data traffic exchanged between the devices. The agent may also perform a similar process with respect to ICMP echo request/reply message pairs. In addition, because the agent is executed on the NIC, the timestamps for at least some of the packets of packet flows, ARP request/reply packets, and ICMP echo request/reply packets are not affected by latencies within the host caused by the kernel network stack, DMA transfers or memory copying between the NIC memory and host memory, interrupts and polling, process context switching, and other nondeterministic timing that generally affects the latency of packet processing. As a result, the techniques may improve the accuracy and reliability of the timestamps and round-trip time computations.

In some examples, a system includes: a network interface card (NIC) of a first computing device, wherein the NIC comprises: a set of interfaces configured to receive one or more packets and send one or more packets; and a processing unit configured to: identify information indicative of a forward packet; compute, based on a first time corresponding to the forward packet and a second time corresponding to a reverse packet associated with the forward packet, a latency between the first computing device and a second computing device, wherein the second computing device includes a destination of the forward packet and a source of the reverse packet; and output information indicative of the latency between the first computing device and the second computing device.

In some examples, a method includes: identifying, by a processing unit of a network interface card (NIC) of a first computing device, information indicative of a forward packet, wherein the NIC includes a set of interfaces, and wherein the set of interfaces is configured to receive one or more packets and send one or more packets; computing, by the processing unit based on a first time corresponding to the forward packet and a second time corresponding to a reverse packet associated with the forward packet, a latency between the first computing device and a second computing device, wherein the second computing device includes a destination of the forward packet and a source of the reverse packet; and outputting, by the processing unit, information indicative of the latency between the first computing device and the second computing device.

In some examples, a computer-readable medium includes instructions for causing a processing unit of a network interface card (NIC) of a first computing device to: identify information indicative of a forward packet; compute, based on a first time corresponding to the forward packet and a second time corresponding to a reverse packet associated with the forward packet, a latency between the first computing device and a second computing device, wherein the second computing device includes a destination of the forward packet and a source of the reverse packet; and output information indicative of the latency between the first computing device and the second computing device.

The details of one or more embodiments of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system having a data center, in accordance with one or more techniques of this disclosure.
FIG. 2 is a block diagram illustrating an example computing device that uses a network interface card having a separate processing unit, to perform services managed by an edge services platform, in accordance with one or more techniques of this disclosure.
FIG. 3 is a conceptual diagram illustrating a data center with servers that each include a network interface card having a separate processing unit, controlled by an edge services platform, in accordance with one or more techniques of this disclosure.
FIG. 4 is a block diagram illustrating an example computing device that uses a network interface card having a separate processing unit, to perform services managed by an edge services platform, in accordance with one or more techniques of this disclosure.
FIG. 5 is a block diagram illustrating components of the example network system of FIG. 1 including packet flows, in accordance with one or more techniques of this disclosure.
FIG. 6 is a flow diagram illustrating a first example operation for determining a latency between two devices, in accordance with one or more techniques of this disclosure.
FIG. 7 is a flow diagram illustrating a second example operation for determining a latency between two devices, in accordance with one or more techniques of this disclosure.

Like reference characters denote like elements throughout the description and figures.

### DETAILED DESCRIPTION

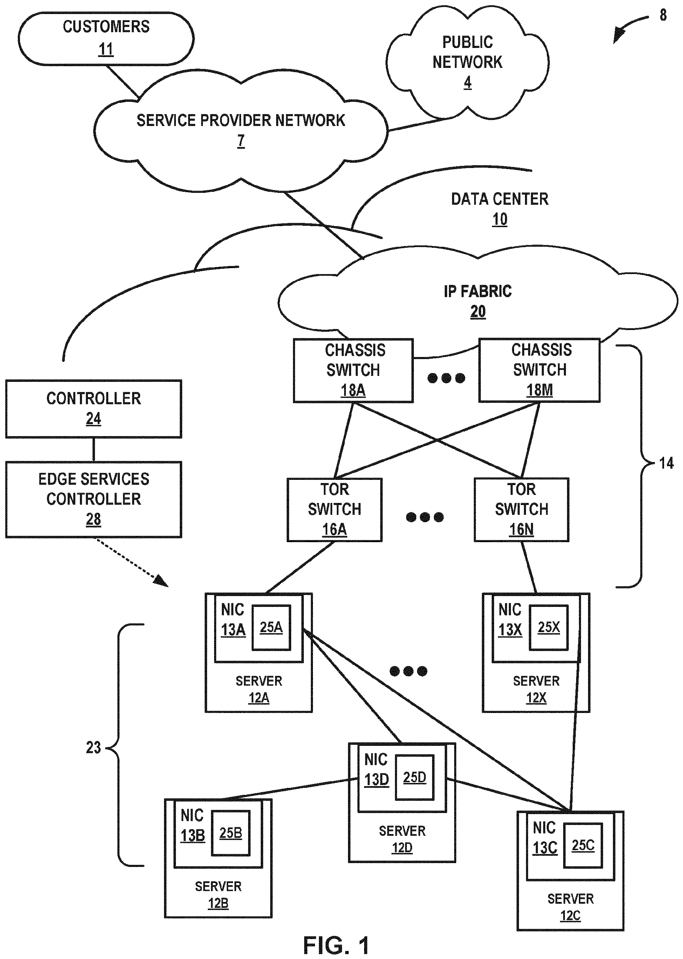

FIG. 1 is a block diagram illustrating an example network system 8 having a data center 10, in accordance with one or more techniques of this disclosure. In general, data center 10 provides an operating environment for applications and services for a customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack switches 16A-16N. Servers 12 may also be referred to herein as "hosts" or "host devices." Although only servers coupled to TOR switch 16A are shown in detail in FIG. 1, data center 10 may include many additional servers coupled to other TOR switches 16 of the data center 10.

Switch fabric 14 in the illustrated example includes interconnected top-of-rack (TOR) (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

The term "packet flow," "traffic flow," or simply "flow" refers to a set of packets originating from a particular source device or endpoint and sent to a particular destination device or endpoint. A single flow of packets may be identified by the 5-tuple: <source network address, destination network address, source port, destination port, protocol>, for example. This 5-tuple generally identifies a packet flow to which a received packet corresponds. An *n*-tuple refers to any n items drawn from the 5-tuple. For example, a 2-tuple for a packet may refer to the combination of <source network address, destination network address> or <source network address, source port> for the packet.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints 23 (illustrated in FIG. 1 as "EPs" 23) for one or more virtual networks that operate over the physical network represented here by IP fabric 20 and switch fabric 14. Although described primarily with respect to a data center-based switching network, other physical networks, such as service provider network 7, may underlay the one or more virtual networks.

Servers 12 each includes at least one network interface card (NIC) of NICs 13A-13X (collectively, "NICs 13"), which each include at least one port with which to exchange packets send and receive packets over a communication link. For example, server 12A includes NIC 13A.

In some examples, each of NICs 13 provides one or more virtual hardware components 21 for virtualized input/output (I/O). A virtual hardware component for I/O maybe a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components 21. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

NICs 13 each includes a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

In accordance with various aspects of the techniques described in this disclosure, an edge services platform leverages processing units 25 of NICs 13 to augment the processing and networking functionality of switch fabric 14 and/or servers 12 that include NICs 13.

Edge services controller 28 manages the operations of the edge services platform within NIC 13s by orchestrating services to be performed by processing units 25; API driven deployment of services on NICs 13; NIC 13 addition, deletion and replacement within the edge services platform; monitoring of services and other resources on NICs 13; and management of connectivity between various services running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Appln. No. 14/226,509, filed March 26, 2014, and entitled "Tunneled Packet Aggregation for Virtual Networks," each which is incorporated by reference as if fully set forth herein.

In some examples, an NIC of a first computing device (e.g., NIC 13A of server 12A), wherein the NIC includes a set of interfaces configured to receive one or more packets and send one or more packets. A forward packet may represent a packet sent from server 12A to another computing device, and a reverse packet may represent received by server 12A from the other computing device in response to the forward packet. Consequently, NIC 13A may both send and receive packets, and NIC 13A may process packets to determine whether a packet represents a forward packet or a reverse packet. In some examples, NIC 13A includes a processing unit 25A configured to identify information indicative of a forward packet received by the set of interfaces. Processing unit 25A may compute, based on a first time corresponding to the forward packet and a second time corresponding to a reverse packet associated with the forward packet, a latency between server 12A and a another computing device (e.g., server 12X), where server 12X includes a destination of the forward packet and a source of the reverse packet. The latency between server 12A and server 12X may represent an amount of time that it takes for a packet to travel from server 12A to 12X or travel from server 12X to 12A. That is, the latency between server 12A and server 12X may represent one half of an amount of time that it takes for a packet to make a round trip between server 12A and server 12X. In some examples, processing unit 25A may output information indicative of the latency between the first computing device and the second computing device.

It may be beneficial for processing units 25 of NICs 13 to analyze one or more forward packets and one or more reverse packets to determine latencies between servers in data center 8. The one or more packets processed by That is, by analyzing packets passing through NICs 13 to determine latency values, processing units 25 may determine latency values while consuming a smaller amount of network resources as compared with systems that do not use computing resources of NICs to determine latency values. Furthermore, processing units 25 efficiently use the resources of NICs 13 to determine one or more latencies based on packets that exist for one or more purposes other than determining latencies. In other words, NICs 13 may not send ping packets solely for the purpose of determining latency. NICs 13 analyze packets that have other purposes, thus decreasing an amount of consumed network resources as compared with systems that determine latencies by sending ping packets.

In some examples, edge services controller 28 is configured to receive the information indicative of the latency between server 12A and server 12X from NIC 13A. Edge services controller 28 may update a latency table to include the latency between server 12A and the server 12X. The latency table maintained by edge services controller 28 may indicate a plurality of latencies, each latency of the plurality of latencies corresponding to a respective pair of servers of servers 12. For example, the latency table may include a latency between server 12A and server 12B, a latency between server 12A and server 12C, latency between server 12B and server 12C, and so on. Each time that edge services controller 28 receives a latency value from one of NICs 13A, edge services controller 28 may maintain the latency table to indicate the received latency value. In some examples, edge services controller 28 may generate a Pingmesh diagram based on the latency table. Edge services controller 20 may output the Pingmesh diagram to a user interface so that an administrator can view a health of the network.

In addition to determining a latency between server 12A and server 12X, processing unit 25A may determine a latency between server 12A and one or more other servers of servers 12. For example, processing unit 12A may identify information indicative of a forward packet received NIC 13A. NIC 13A may determine that a source device of the forward packet is server 12A and a destination device of the forward packet is server 12C. Processing unit 25A may be configured to compute a latency between the server 12A and the server 12C. Server 12C includes a destination of the forward packet and a source of a reverse packet corresponding to the forward packet. Processing unit 25A may output information indicative of the latency between the server 12A and the server 12C. A processing unit of an NIC may determine the latency between a host server of the NIC and one or more other servers of the data center 10. For example, processing unit 25A of NIC 13A may determine a latency between server 12A and server 12B, a latency between server 12A and server 12C, a latency between server 12A and server 12D, a latency between server 12A and server 12X, and a latency between server 12A and one or more other computing devices configured to receive forward packets and output reverse packets. Additionally, or alternatively, processing unit 25B of NIC 13B may determine a latency between server 12B and server 12A, a latency between server 12B and server 12C, a latency between server 12B and server 12D, a latency between server 12B and server 12X, and a latency between server 12B and one or more other computing devices configured to receive forward packets and output reverse packets. Processing units 25C-25X may determine latencies between their respective host servers and other servers within the data center 10 or outside of data center 10.

In some examples, NIC 13A may receive a packet. The source device of the forward packet may be server 12A and a destination device of the forward packet may be server 12X. Processing unit 25A may be configured to identify a source internet protocol (IP) address and a destination IP address in a header of the packet. Based on the source IP address and the destination IP address, processing unit 25A may determine that the packet is a forward packet originating at server 12A and bound for server 12X. Consequently, processing unit 25A may be configured to determine the latency between server 12A and server 12X when NIC 13A sends the forward packet to server 12X, and when NIC 13A receives a reverse packet from server 12X in response to server 12X receiving the forward packet.

In some examples, processing unit 25A may be configured to determine the latency between server 12A and server 12X only when server 12X immediately sends a reverse packet in response to receiving the forward packet from server 12A. When server 12X does not immediately send a reverse packet, processing unit 25A might not be configured to determine the latency between server 12A and server 12X based on the time that the reverse packet arrives at the server 12A, since the reverse packet is delayed. Some types of packets are configured to elicit an immediate reverse packet from a destination device. For example, transmission control protocol (TCP) packets having any one or more of the synchronize (SYN) TCP packet flag, the urgent (URG) TCP packet flag, and the push (PSH) TCP packet flag may elicit immediate reverse packets. Additionally, or alternatively, packets sent according to one or both of the internet control message protocol (ICMP) and the address resolution protocol (ARP) may elicit immediate reverse packets. In any case, it may be beneficial for processing unit 25A to identify a type of a forward packet and determine whether the type represents a packet type which elicits an immediate reverse packet.

Processing unit 25A may create a flow structure in response to identifying a forward packet having a packet type that elicits an immediate response packet. The flow structure may indicate information indicative of a reverse packet that processing unit 25A expects to receive in response to outputting the forward packet. For example, when processing unit 25A identifies a source IP address and a destination IP address corresponding to the forward packet, processing unit 25A may create the flow structure to indicate an expected source IP address of the reverse packet and an expected destination IP address of the reverse packet. The expected source IP address of the reverse packet may represent the destination IP address of the forward packet, and the expected destination IP address of the reverse packet may represent the source IP address of the forward packet. Additionally, or alternatively, processing unit 25A may create a timestamp corresponding to a time in which the forward packet departs server 12A for the destination device (e.g., server 12X).

NIC 13A may output the forward packet to server 12X. In response to outputting the forward packet to server 12X, NIC 13A may receive a reverse packet. Processing unit 25A is configured to identify information indicative of the reverse packet received by NIC 13A. Processing unit 25A may determine, based on the flow structure generated by processing unit 25A in response to receiving the forward packet, that the reverse packet represents a packet received by NIC 13A in response to outputting the forward packet. For example, processing unit 25A may identify a source IP address of the reverse packet and a destination IP address of the reverse packet. When the source IP address of the reverse packet and a destination IP address of the reverse packet match the expected source IP address and the expected destination IP address in the flow structure, processing unit 25A may determine that the reverse packet represents a packet received by NIC 13A in response to outputting the forward packet.

Processing unit 25A may determine a latency between server 12A and server 12X based on a packet round trip time between server 12A and server 12X. For example, processing unit 25A may identify a time corresponding to an arrival of the reverse packet at the NIC 13A. Since the timestamp generated by processing unit 25A corresponds to a time at which the forward packet departed from server 12A, processing unit 25A may compute the packet round trip time between server 12A and server 12X by subtracting the timestamp from the time corresponding to an arrival of the reverse packet at the NIC 13A. In some examples, the latency may represent half of the packet round trip time. Processing unit 25A may output information indicative of the latency between server 12A and server 12X to edge services controller 28.

In some examples, edge services controller 28 configures processing unit 25A, for instance, to begin measuring latencies between server 12A and other servers 12 or between server 12A and a particular other server 12. Edge services controller 28 may configure processing unit 25A to stop measuring latencies, or parameterize an algorithm executed by processing unit 25A to compute latencies.

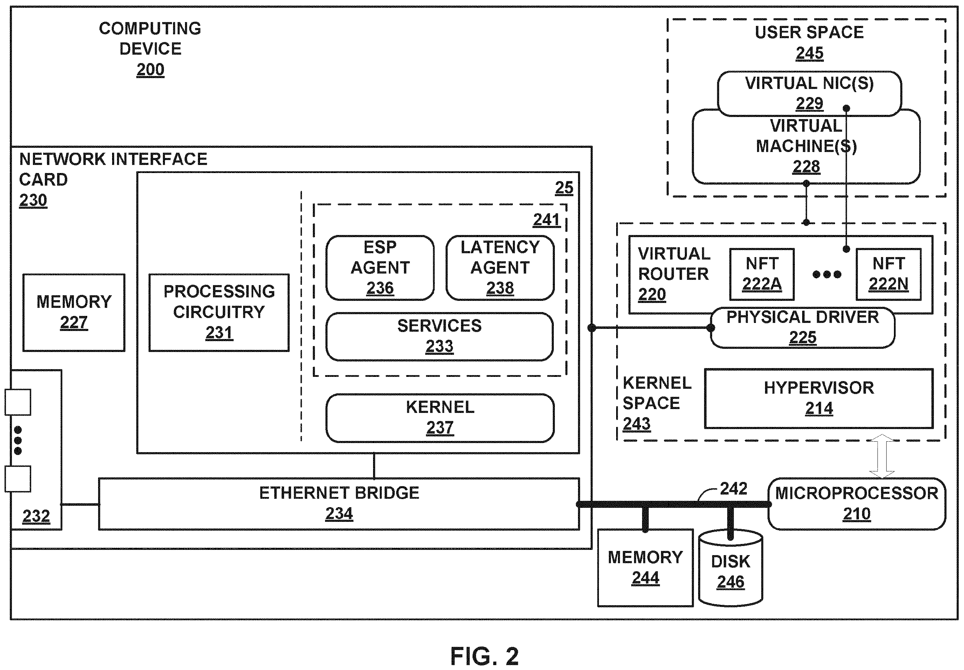

FIG. 2 is a block diagram illustrating an example computing device that uses a network interface card having a separate processing unit, to perform services managed by an edge services platform, in accordance with one or more techniques of this disclosure. Computing device 200 of FIG. 2 may represent a real or virtual server and may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A front-side bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Main memory 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 144 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as one or more containers (e.g., a DOCKER container) may implement virtual network endpoints. Containers may be deployed using Kubernetes pods, for example. An operating system kernel (not shown in FIG. 2) may execute in kernel space and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function 221 provided by network interface card 230. In some cases, network interface card 230 may also implement SR-IOV to enable sharing the physical network function (I/O) among virtual machines 224. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of virtual machines 224 as a dedicated NIC. Virtual functions 217 may represent lightweight PCIe functions that share physical resources with the physical function 221 and with other virtual functions 216. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge 234 to perform layer 2 forwarding between virtual functions and physical functions of NIC 230. Bridge 234 thus provides hardware acceleration, via bus 242, of inter-virtual machine 224 packet forwarding and of packet forwarding between hypervisor 214, which accesses the physical function via physical driver 225, and any of virtual machines 224.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses physical function 221 for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

In accordance with techniques described in this disclosure, an edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs).

In the example NIC 230, processing unit 25 executes an operating system kernel 237 and a user space 241 for services. Kernel may be a Linux kernel, a Unix or BSD kernel, a real-time OS kernel, or other kernel for managing hardware resources of processing unit 25 and managing user space 241.

Services 233 may include network, security, storage, data processing, co-processing, machine learning or other services. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization). As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuration services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231.

Processing unit 25 may execute a latency agent 238 to determine the latency between computing device 200 and one or more other computing devices. In one example, computing device 200 may represent server 12A, and processing unit 25 may execute latency agent 238 to determine a latency between server 12A and server 12X, for instance, based on receiving a forward packet indicating server 12A as a source device and indicating server 12X as a destination device. In some examples, latency agent 238 may be a part of ESP agent 236. For example, NIC 230 may receive, from one or more components of computing device 200 (e.g., microprocessor 210), a forward packet. The packets may be generated by applications running on computing device 200 and executed by microprocessor 210, for example.

The packet may travel through ethernet bridge 234 to interfaces 232. Interfaces 232 may be configured to receive one or more packets and send one or more packets. Consequently, NIC 230 is configured to receive one or more packets from components of computing device 200 via bus 242 and receive one or more packets from other computing devices via interfaces 232. Additionally, or alternatively, NIC 230 is configured to send one or more packets to components of computing device 200 via bus 242 and send one or more packets to other computing devices via interfaces 232.

When NIC 230 receives a packet via interfaces 232 or bus 242, processing unit 25 may sniff the packet off the wire; or ethernet bridge 234 may be configured with filters that match packets useful for determining a latency between computing device 200 and another computing device and switch such packets to processing unit 25 for further processing; or processing unit 25 may (in some cases) include ethernet bridge 234 and apply processing packets useful for determining a latency, as described below and elsewhere in this disclosure.

Processing unit 25 may execute latency agent 238 to identify information corresponding to the packet and analyze the information. For example, latency agent 238 may determine whether the packet is useful for determining a latency between computing device 200 and another computing device. In some examples, when processing unit 25 receives information corresponding to a packet arriving at NIC 230, processing unit 25 may execute latency agent 238 to run an algorithm to determine a latency value. The following example computer code may represent an algorithm for processing packet information to determine a latency value:

```
 foreach packet P
    if protocolType(P) == TCP
        forwardFlow = getFlow(P->sip, P->dip, P->sport, P->dport)
        if valid(forwardFlow)
                    rtt = getTime() - forwardFlow->timeStamp
                    updateLatency(P->sip, P->dip)
                    delete forwardFlow
        elseif
                    if isSet(P->flags, URG || SYN || PSH)
                            reverse Flow = createFlow(P->dip, P->sip, P->dport, P->sport)
                            reverseFlow->timeStamp = getTime()
                    endif
            endif
    elseif protocolType(P) == ICMP
        if isRequest(P)
                    Store sip, dip, current time
        else
                    Update latency for sip, dip
        endif
    elseif protocolType(P) == ARP
        if isRequest(P)
                    Store smac, current time
        else
                    Update latency for smac, dmac
        endif
    endif
        endfor
```

As seen in the example computer code, the latency agent 238 may determine whether a packet arriving at NIC 230 is according to TCP, ICMP, or ARP (e.g., the "if protocolType(P) == TCP," "elseif protocolType(P) == ICMP," and "elseif protocolType(P) == ARP" lines in the example computer code). The latency agent 238 may determine whether the packet is according to the TCP, ICMP, or ARP, because some packets sent according to TCP, ICMP, and ARP elicit immediate reverse packets from the destination device. For example, when NIC 230 sends a forward packet according to ICMP to a destination device, the destination device may immediately send a reverse packet back to NIC 230 when the destination device receives the forward packet. Consequently, packets sent according to TCP, ICMP, and ARP may be useful for determining a latency between two computing devices, because a source device may determine a round trip time based on a time at which the forward packet is sent from the source and a time at which the reverse packet returns to the source. When latency agent 238 determines that a packet is not according to TCP, ICMP, or ARP, the algorithm may conclude and latency agent 238 may apply the algorithm to a next packet arriving at NIC 230.

When latency agent 238 determines that a packet arriving at NIC 230 is sent according to TCP, latency agent 238 may proceed to determine whether the packet represents a forward packet. For example, latency agent 238 may determine a source IP address and a destination IP address corresponding to the packet. When the source IP address corresponds to computing device 200 and the destination device corresponds to another computing device, the packet represents a forward packet.

When latency agent 238 determines that a packet arriving at NIC 230 is a forward packet sent according to TCP, then latency agent 238 may determine whether the packet includes at least one of a set of packet flags (e.g., the "if isSet(P->flags, URG || SYN || PSH)" line in the example computer code). As seen in the example computer code, the set of TCP packet flags may include the synchronize (SYN) TCP packet flag, the urgent (URG) TCP packet flag, and the push (PSH) TCP packet flag. The SYN packet flag, the URG packet flag, and the PSH packet flag may indicate a TCP packet that elicits an immediate reverse packet from the destination device. One or more TCP packets that do not include the SYN packet flag, the URG packet flag, or the PSH packet flag might not elicit an immediate reverse packet from the destination device. Consequently, it may be beneficial for latency agent 238 to determine latency based on TCP packets that include any one or more of the SYN packet flag, the URG packet flag, or the PSH packet flag.

Processing unit 25 may execute latency agent 238 to create a flow structure based on identifying a forward packet sent according to the TCP protocol (e.g., the "reverseFlow = createFlow(P->dip, P->sip, P->dport, P->sport)" line in the example computer code). The flow structure may include an expected source IP address and an expected destination IP address corresponding to a reverse packet expected to arrive at NIC 230 in response to the forward packet arriving at the destination device. In some examples, the expected source IP address of the reverse packet is the destination IP address of the forward packet and the expected destination IP address of the reverse packet is the source IP address of the forward packet, since the forward packet and the reverse packet complete a "round trip" between a pair of devices.

Additionally, or alternatively, processing unit 25 may create a timestamp based on identifying a forward packet sent according to the TCP protocol (e.g., the "reverseFlow->timeStamp = getTime()" line in the example computer code). NIC 230 may output the forward packet to the destination device. Processing unit 25 may create the timestamp to indicate an approximate time at which the forward packet departs NIC 230 for the destination device.

When NIC 230 receives a reverse packet based on the destination device receiving the forward packet, Processing unit 25 may identify information corresponding to the reverse packet. For example, processing unit 25 may execute latency agent 238 to identify a source IP address and a destination IP address indicated by the reverse packet. Processing unit 25 may determine, based on the flow structure created for the forward packet, that the reverse packet represents a packet sent by the destination device in response to receiving the forward packet (e.g., the "forwardFlow = getFlow(P->sip, P->dip, P->sport, P->dport)" and "if valid(forwardFlow)" lines in the example computer code. Based on determining that the reverse packet corresponds to the forward packet, NIC 230 may execute the latency agent 238 to determine a round trip time between computing device 200 and the destination device of the forward packet (e.g., the "rtt = getTime() - forwardFlow->timeStamp" line in the example computer code. To determine the round trip time, latency agent 238 may subtract the timestamp corresponding to the time at which the forward packet departed from NIC 230 (e.g., "forwardFlow->timestamp") from a current time at which the reverse packet arrives at NIC 230 (e.g., "getTime()"). Since the forward packet immediately prompted the destination device to send the reverse packet, the round trip time indicates a latency between computing device 200 and the destination device. Subsequently, latency agent 238 may update the latency between the computing device 200 and the destination device.

When latency agent 238 determines that a packet arriving at NIC 230 is a forward packet sent according to ICMP or ARP, latency agent 238 may perform a process similar to the process described for TCP packets, except latency agent 238 might not check packet flags in the example of ICMP and ARP packets.

In some examples, an NIC may use a rate at which a TCP sequence number is moving in an elephant flow to calculate a throughput between the two nodes (e.g., between two of servers 12). Latency agent 238 may execute an algorithm to track one or more packet flows and track throughput corresponding to the one or more packet flows.

In some examples, a media access control (MAC) address table on an NIC identifies whether a the NIC is alive or not. If the NIC is not communicating with any other node, the MAC table entry times out after 3 minutes. ESP agent 236 and/or latency agent 238 may use this timeout event to maintain the reachability state of an ESP agent 236.

In some examples, edge services controller 28 may configure, via ESP agent 236, latency agent 238 with a list of endpoints of interest. Such endpoints may be IP addresses of one or more other computing devices. In such cases, latency agent 238 may only apply the latency determination techniques described herein to compute latencies between computing device 200 and those computing devices in the list of endpoints of interest. Alternatively, Ethernet bridge 234 filters may be configured to switch packets to processing unit 25 that have packet header information identifying such packets as associated with a list of endpoints of interest.

In some examples, the *n*-tuple (P->sip, P->dip, P->sport, P->dport) packet information used in the above algorithm represent packet information in the inner packet header for overlay/virtual networks. That is, the endpoints are virtual network endpoints such as virtual machines or pods, and the latency information is computed for packets exchanged between virtual network endpoints rather than (or in addition to) between servers.

Processing unit 25 may measure latency between two nodes (e.g., any two of servers 12) of a network by tracking packets that pass through NICs 13. In some examples, Processing units 25 might determine a latency between two devices based ion TCP packets having one or more of a set of packet flags. The destination device may process some TCP packets (e.g., TCP packets without any of the set of packet flags) before the destination device sends a reverse packet. The destination device may send immediate responses to TCP packets with URG, PSH or SYN flags. For example, when server 12A sends a forward TCP packet with a URG flag, a PSH flag, or a SYN flag to server 12D, server 12D may immediately send a reverse packet upon receiving the forward packet. Additionally, or alternatively, destination devices may immediately send reverse packets upon receiving ICMP and ARP requests. As such, processing unit 25 of NIC 230 may record a time elapsed from when server computing device 200 sends the forward packet to when computing device 200 receives the reverse packet from the destination device. The elapsed time may represent a latency between computing device 200 and the destination device. By determining the latency between the computing device 200 and the destination device without sending a probe packet from the computing device 200 to the destination device, the processing unit 25 may collect information for a Pingmesh diagram while consuming a smaller amount of network resources as compared with systems that send ping packets to determine latency. Processing unit 25 may timestamp TCP packets having one or more tags (e.g., URG, PSH or SYN) to compute latency. In some examples, a processing unit (e.g., processing unit 25) may execute an algorithm for determining a latency between two servers of servers 12.

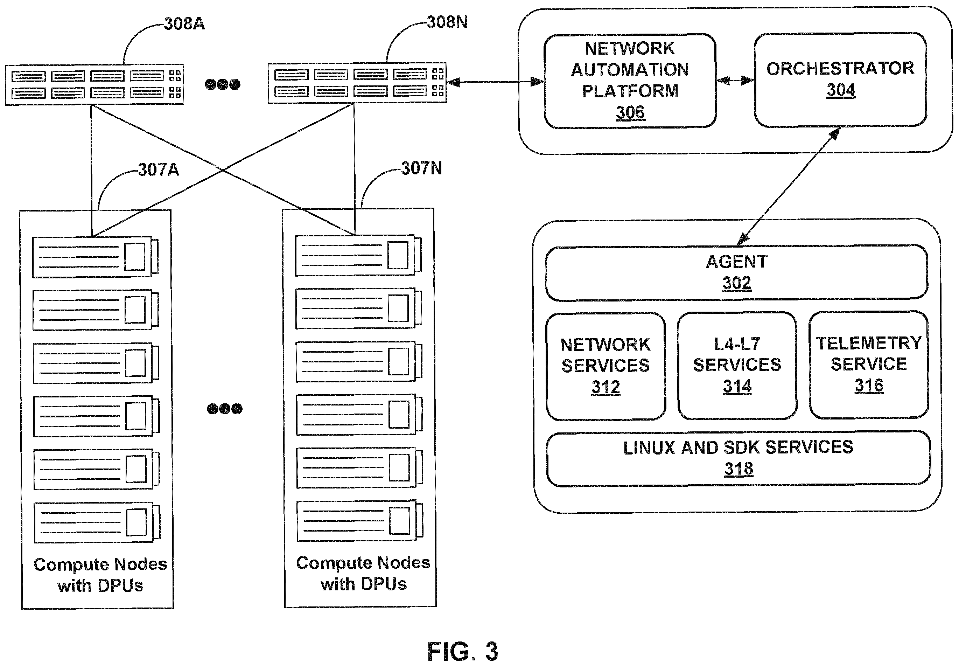

FIG. 3 is a conceptual diagram illustrating a data center with servers that each include a network interface card having a separate processing unit, controlled by an edge services platform, in accordance with one or more techniques of this disclosure. Racks of compute nodes 307A-307N (collectively, "racks of compute nodes 307") may correspond to servers 12 of FIG. 1, and switches 308A-308N (collectively, "switches 308") may correspond to the switches of fabric 14 of FIG. 1. An agent 302 or orchestrator 304 represents software executed by the processing unit (here referred to as a data processing unit or DPU) and receives configuration information for the processing unit and sends telemetry and other information for the NIC that includes the processing unit to orchestrator 304. In some examples, agent 302 includes one or both of ESP agent 236 and latency agent 238 of FIG. 2. In some examples, agent 302 includes a JESP agent. Network services 312, L4-L7 services 314, telemetry service 316, and Linux and software development kit (SDK) services 318 may represent examples of services 233. Orchestrator 304 may represent an example of edge services controller 28 of FIG. 1. In some examples, agent 302 may send one or more computed latencies to orchestrator 304. Orchestrator 304 may maintain a latency table to include latencies received from agent 302 and agents executed by other devices. Orchestrator 304 may generate a Pingmesh diagram based on the latency table, where the Pingmesh diagram indicates a health of the network system 8 of FIG. 1.

Network automation platform 306 connects to and manages network devices and orchestrator 304, by which network automation platform 306 can utilize the edge services platform. Network automation platform 306 may, for example, deploy network device configurations, manage the network, extract telemetry, and analyze and provide indications of the network status.

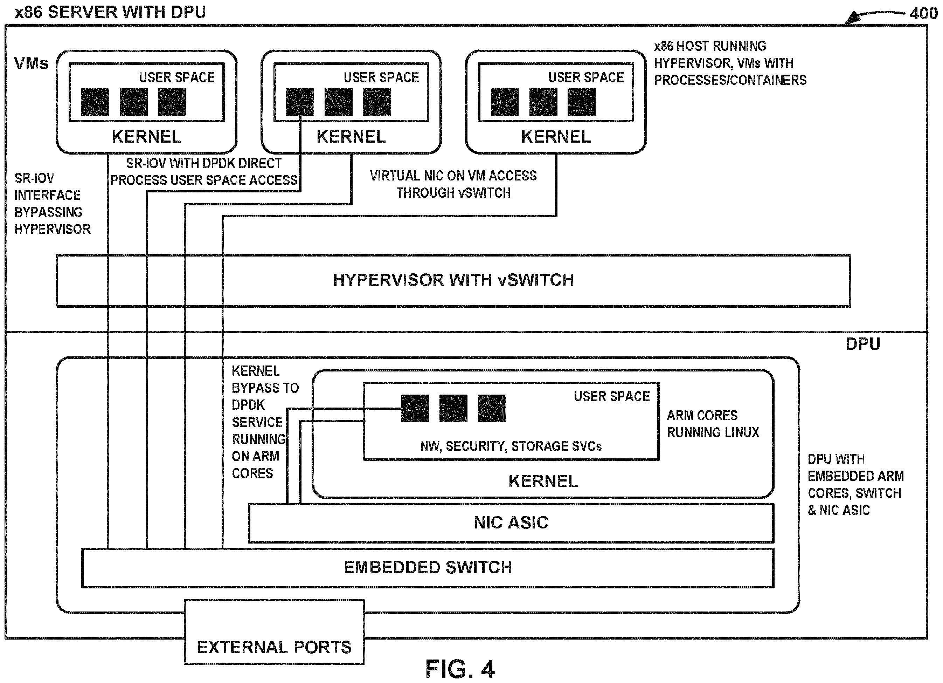

FIG. 4 is a block diagram illustrating an example computing device that uses a network interface card having a separate processing unit, to perform services managed by an edge services platform according to techniques described herein. Although virtual machines are shown in this example, other instances of computing device 400 may also or alternatively run containers, native processes, or other endpoints for packet flows. Different types of vSwitches may be used, such as Open vSwitch or a virtual router (e.g., Contrail). Other types of interfaces between endpoints and NIC are also contemplated, such as tap interfaces, veth pair interfaces, etc.

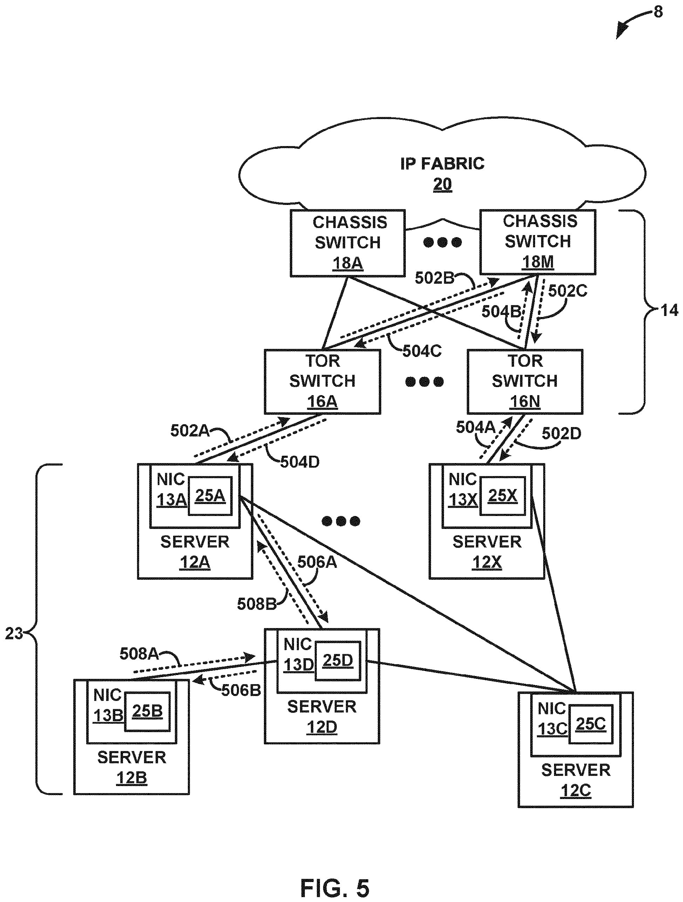

FIG. 5 is a block diagram illustrating components of the example network system 8 of FIG. 1 including packet flows, in accordance with one or more techniques of this disclosure. As seen in FIG. 5, a first forward packet travels from server 12A to server 12X via connection 502A, connection 502B, connection 502C, and connection 502D. A first reverse packet travels from server 12X to server 12A via connection 504A, connection 504B, connection 504C, and connection 504D. A second forward packet travels from server 12A to server 12B via connection 506A and connection 506B. A second reverse packet travels from server 12B to server 12A via connection 508A and connection 508B. Processing unit 25A may be configured to determine a latency between server 12A and server 12X based on the first forward packet and the first reverse packet, and processing unit 25A may be configured to determine a latency between server 12A and server 12B based on the second forward packet and the second reverse packet. Consequently, processing unit 25A may be configured to determine a latency between two servers based on packets that travel through the switch fabric 14, and processing unit 25A may be configured to determine a latency between two servers based on packets that travel between endpoints 23 without travelling through the switch fabric 14.

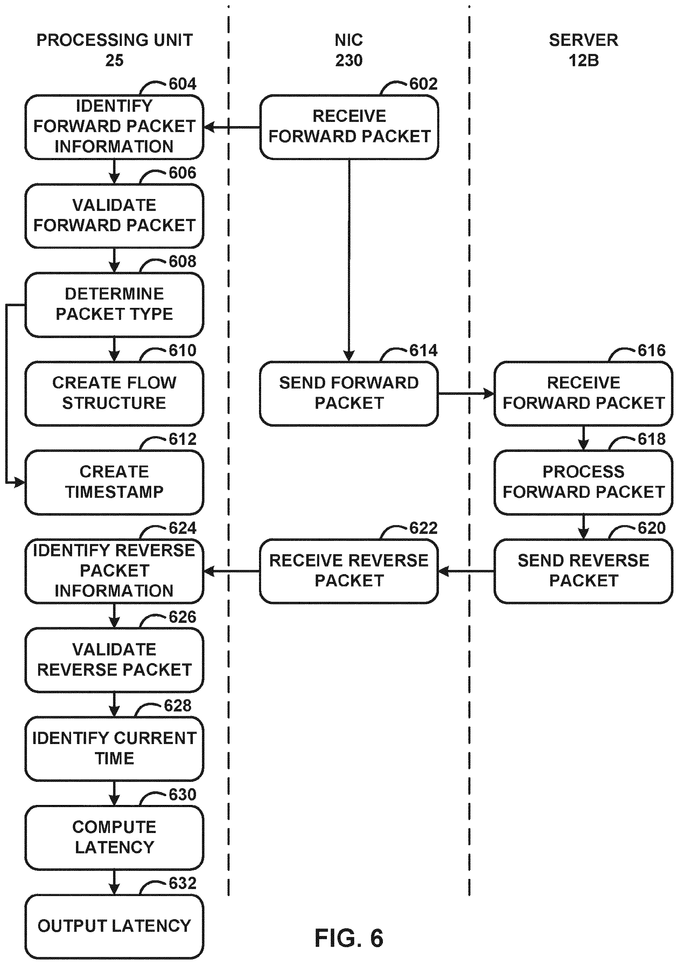

FIG. 6 is a flow diagram illustrating a first example operation for determining a latency between two devices, in accordance with one or more techniques of this disclosure. For convenience, FIG. 6 is described with respect to network system 8 of FIG. 1 and computing device 200 of FIG. 2. However, the techniques of FIG. 6 may be performed by different components of network system 8 and computing device 200 or by additional or alternative devices.

NIC 230 may receive a forward packet (602). In some examples, NIC 230 may receive the forward packet via bus 242, because the forward packet represents a packet originating from computing device 200 and destined for a real or virtual destination device. The application data for the packet may originate from a process executing on computing device 200, such as an application, service (in user space 245), a kernel module of the host OS in kernel space 243. Processing unit 25 may identify information corresponding to the forward packet (604) and validate the forward packet based on the information (606). In some examples, processing unit 25 may validate the forward packet by identifying a source IP address and a destination IP address indicated by the packet. To validate the forward packet, processing unit 25 may confirm that the packet represents a forward packet. Processing unit 25 may determine a packet type (608) of the forward packet. For example, to determine the packet type, processing unit may determine whether the packet is sent according to TCP, ICMP, or ARP. If the packet is sent according to TCP, processing unit 25 may determine whether the packet includes at least one of a set of packet headers. Processing unit 25 may create a flow structure (610) corresponding to the forward packet. In some examples, the flow structure indicates information corresponding to a reverse packet expected to arrive at NIC 230 in response to the destination device receiving the forward packet. Processing unit 25 may create a timestamp (612) corresponding to a time at which the forward packet departs the NIC 230 for the destination device.

NIC 230 may send the forward packet (614) to the destination device. In some examples, NIC 230 is an example of NIC 13A of server 12A, and the destination device represents server 12B, but this is not required. NIC 230 may represent any of NICs 13, and the destination device may represent any of servers 12 that do not hist NIC 230. Server 12B may receive the forward packet (616). Server 12B may process the forward packet (618). In some examples, server 12B may identify that the packet represents a forward packet from server 12A. Server 12B may send a reverse packet (620) to server 12A. In some examples, server 12B sends the reverse packet immediately upon detecting an arrival of the forward packet.

NIC 230 may receive the reverse packet (622). Processing unit 25 may identify reverse packet information (624) and validate the reverse packet (626). In some examples, processing unit 25 may validate the reverse packet by determining that a source IP address and a destination IP address of the reverse packet match the expected source IP address and the expected destination IP address of the flow structure (step 610). Processing unit 25 may identify a current time (628) corresponding to the time at which NIC 230 receives the reverse packet. Processing unit 25 may compute a latency (630) between server 12A and server 12B based on the timestamp and the current time. Processing unit 25 may output information indicative of the latency (632).

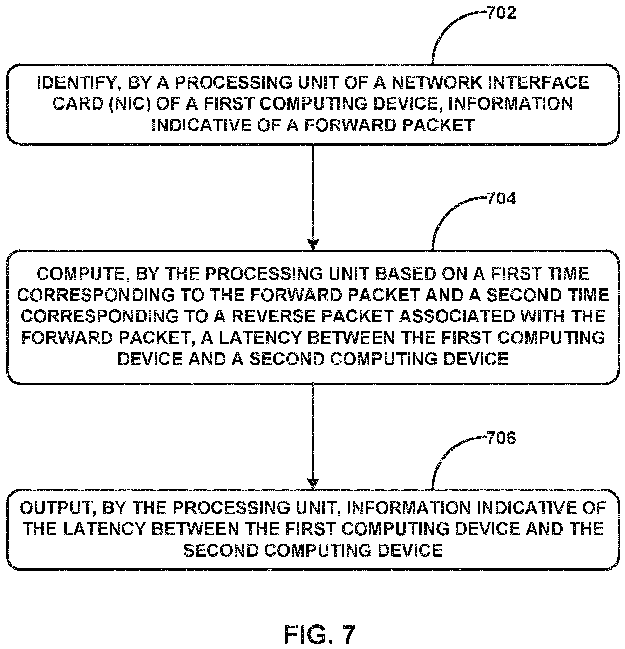

FIG. 7 is a flow diagram illustrating a second example operation for determining a latency between two devices, in accordance with one or more techniques of this disclosure. For convenience, FIG. 7 is described with respect to network system 8 of FIG. 1 and computing device 200 of FIG. 2. However, the techniques of FIG. 7 may be performed by different components of network system 8 and computing device 200 or by additional or alternative devices.

In some examples, processing unit 25 of NIC 230 of computing device 200 may identify information indicative of a forward packet (702). In some examples, the information includes a source device of the forward packet and a destination device of the forward packet. In some examples, the information includes a protocol of the packet. The information may inform the processing unit 25 whether the forward packet will cause the destination device to immediately send a reverse packet upon receiving the forward packet, thus allowing the processing unit 25 to calculate a latency between the first computing device and a second computing device. Based on determining that the information indicates that the forward packet will cause the destination device to immediately send a reverse packet, the processing unit 25 may determine that it is possible to compute a latency based on the forward packet and the reverse packet.

Processing unit 25 may compute, based on a first time corresponding to the forward packet and a second time corresponding to a reverse packet associated with the forward packet, a latency between the first computing device and a second computing device (704). In some examples, processing unit 25 is configured to calculate the latency based on a difference in time between the first time and the second time. Processing unit 25 may output information indicative of the latency between the first computing device and the second computing device (706).

Thus, from one perspective, there has now been described a system configured to compute a latency between a first computing device and a second computing device. The system includes a network interface card (NIC) of a first computing device. The NIC includes a set of interfaces configured to receive one or more packets and send one or more packets. The processing unit is configured to identify information indicative of a forward packet, compute, based on a first time corresponding to the forward packet and a second time corresponding to a reverse packet associated with the forward packet, a latency between the first computing device and a second computing device, wherein the second computing device includes a destination of the forward packet and a source of the reverse packet, and output information indicative of the latency between the first computing device and the second computing device.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. Additionally, or alternatively, a computer-readable medium can include transient media such as carrier signals and transmission media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Further examples of feature combinations taught by the present disclosure are set out in the following numbered clauses:
1. A system comprising:
   a network interface card (NIC) of a first computing device, wherein the NIC comprises:
   a set of interfaces configured to receive one or more packets and send one or more packets; and
   a processing unit configured to:
      identify information indicative of a forward packet;
      compute, based on a first time corresponding to the forward packet and a second time corresponding to a reverse packet associated with the forward packet, a latency between the first computing device and a second computing device, wherein the second computing device includes a destination of the forward packet and a source of the reverse packet; and
      output information indicative of the latency between the first computing device and the second computing device.
2. The system of clause 1, wherein the system further comprises:
   a plurality of computing devices including the first computing device and the second computing device; and
   the controller, wherein the controller is configured to:
      receive the information indicative of the latency between the first computing device and the second computing device; and
      update a latency table to include the latency between the first computing device and the second computing device, wherein the latency table indicates a plurality of latencies, each latency of the plurality of latencies corresponding to a pair of computing devices of the plurality of computing devices.
3. The system of clause 1 or clause 2, wherein the forward packet represents a first forward packet, wherein the reverse packet represents a first reverse packet, and wherein the processing unit is configured to:
   identify information indicative of a second forward packet;
   compute, based on a third time corresponding to the second forward packet and a fourth time corresponding to a second reverse packet associated with the second forward packet, a latency between the first computing device and a third computing device, wherein the third computing device includes a destination of the second forward packet and a source of the second reverse packet; and
   output information indicative of the latency between the first computing device and the third computing device.
4. The system of any preceding clause, wherein to identify the information indicative of the forward packet, the processing unit is configured to:
   identify a source internet protocol (IP) address and a destination IP address in a header of a packet received at the NIC; and
   determine, based on a source IP address and a destination IP address, that the packet represents the forward packet.
5. The system of any preceding clause, wherein based on identifying the information indicative of the forward packet, the processing unit is configured to:
   create a flow structure indicating information corresponding to the reverse packet associated with the forward packet; and
   create a timestamp corresponding to a time in which the forward packet departs the first computing device for the second computing device, wherein the first time is based on the time.
6. The system of clause 5, wherein the NIC is configured to output, via the set of interfaces to the second computing device, the forward packet, and wherein the processing unit is further configured to:
   identify information indicative of a packet received by the set of interfaces;
   determine, based on the flow structure, that the packet represents the reverse packet associated with the forward packet;
   identify a time corresponding to an arrival of the reverse packet at the set of interfaces; and
   determine, based on the timestamp corresponding to the time in which the forward packet departs the set of interfaces and the time corresponding to the arrival of the reverse packet at the set of interfaces, the latency between the first computing device and the second computing device.
7. The system of any preceding clause, wherein the processing unit is configured to determine, based on the information indicative of the forward packet, that the forward packet represents at least one packet type of a set of packet types configured within the processing unit as useful for determining latencies.
8. The system of clause 7, wherein the at least one packet type indicates that the forward packet is configured for prompting an immediate reverse packet from the second computing device so that a difference between the first time and the second time represents a round trip time between the first computing device and the second computing device.
9. The system of clause 7 or clause 8, wherein to determine that the forward packet represents the at least one packet type of the set of packet types, the processing unit is configured to:
   determine that the forward packet includes at least one Transmission Control Protocol (TCP) packet flag of a set of TCP packet flags, wherein the set of TCP packet flags include the synchronize (SYN) TCP packet flag, the urgent (URG) TCP packet flag, and the push (PSH) TCP packet flag.
10. The system of any preceding clause, wherein to determine that the forward packet represents the at least one packet type of the set of packet types, the processing unit is configured to determine that the forward packet is an internet control message protocol (ICMP) packet or an address resolution protocol (ARP) packet.
11. A method comprising:
   identifying, by a processing unit of a network interface card (NIC) of a first computing device, information indicative of a forward packet, wherein the NIC includes a set of interfaces, and wherein the set of interfaces is configured to receive one or more packets and send one or more packets;
   computing, by the processing unit based on a first time corresponding to the forward packet and a second time corresponding to a reverse packet associated with the forward packet, a latency between the first computing device and a second computing device, wherein the second computing device includes a destination of the forward packet and a source of the reverse packet; and
   outputting, by the processing unit, information indicative of the latency between the first computing device and the second computing device.
12. The method of clause 11, further comprising:
   receiving, by a controller, the information indicative of the latency between the first computing device and the second computing device, wherein a plurality of computing devices includes the first computing device and the second computing device; and
   updating, by the controller, a latency table to include the latency between the first computing device and the second computing device, wherein the latency table indicates a plurality of latencies, each latency of the plurality of latencies corresponding to a pair of computing devices of the plurality of computing devices.
13. The method of clause 11 or clause 12, wherein the forward packet represents a first forward packet, wherein the reverse packet represents a first reverse packet, and wherein the method further comprises:
   identifying, by the processing unit, information indicative of a second forward packet;
   computing, by the processing unit based on a third time corresponding to the second forward packet and a fourth time corresponding to a second reverse packet associated with the second forward packet, a latency between the first computing device and a third computing device, wherein the third computing device includes a destination of the second forward packet and a source of the second reverse packet; and
   outputting, by the processing unit information indicative of the latency between the first computing device and the third computing device.
14. The method of any of clauses 11 to 13, wherein identifying the information indicative of the forward packet comprises:
   identifying, by the processing unit, a source internet protocol (IP) address and a destination IP address in a header of a packet received at the NIC; and
   determining, by the processing unit based on a source IP address and a destination IP address, that the packet represents the forward packet.
15. The method of any of clauses 11 to 14, wherein based on identifying the information indicative of the forward packet, the method further comprises:
   creating, by the processing unit, a flow structure indicating information corresponding to the reverse packet associated with the forward packet; and
   creating, by the processing unit, a timestamp corresponding to a time in which the forward packet departs the first computing device for the second computing device, wherein the first time is based on the time.
16. The method of clause 15, further comprising:
   outputting, by the NIC via the set of interfaces, the forward packet to the second computing device;
   identifying, by the processing unit, information indicative of a packet received by the set of interfaces;
   determining, by the processing unit based on the flow structure, that the packet represents the reverse packet associated with the forward packet;
   identifying, by the processing unit, a time corresponding to an arrival of the reverse packet at the set of interfaces; and
   determining, by the processing unit based on the timestamp corresponding to the time in which the forward packet departs the set of interfaces and the time corresponding to the arrival of the reverse packet at the set of interfaces, the latency between the first computing device and the second computing device.
17. The method of any of clauses 11 to 16, further comprising determining, by the processing unit based on the information indicative of the forward packet, that the forward packet represents at least one packet type of a set of packet types, the set of packet types configured within the processing unit as useful for determining latencies.
18. The method of clause 17, wherein determining that the forward packet represents the at least one packet type of the set of packet types comprises:
   determining, by the processing unit, that the forward packet includes at least one transmission control protocol (TCP) packet flag of a set of TCP packet flags, wherein the set of TCP packet flags include the synchronize (SYN) TCP packet flag, the urgent (URG) TCP packet flag, and the push (PSH) TCP packet flag.
19. The method of any of clauses 11 to 18, wherein determining that the forward packet represents the at least one packet type of the set of packet types comprises determining, by the processing unit, that the forward packet is an internet control message protocol (ICMP) packet or an address resolution protocol (ARP) packet.
20. A computer-readable medium comprising instructions for causing a processing unit of a network interface card (NIC) of a first computing device to:
   identify information indicative of a forward packet;
   compute, based on a first time corresponding to the forward packet and a second time corresponding to a reverse packet associated with the forward packet, a latency between the first computing device and a second computing device, wherein the second computing device includes a destination of the forward packet and a source of the reverse packet; and
   output information indicative of the latency between the first computing device and the second computing device.

## Claims

1. A system comprising:
a network interface card, NIC, of a first computing device, wherein the NIC comprises:
a set of interfaces configured to receive one or more packets and send one or more packets; and
a processing unit configured to:
identify information indicative of a forward packet;
compute, based on a first time corresponding to the forward packet and a second time corresponding to a reverse packet associated with the forward packet, a latency between the first computing device and a second computing device, wherein the second computing device includes a destination of the forward packet and a source of the reverse packet; and
output information indicative of the latency between the first computing device and the second computing device.

2. The system of claim 1, wherein the system further comprises:
a plurality of computing devices including the first computing device and the second computing device; and
the controller, wherein the controller is configured to:
receive the information indicative of the latency between the first computing device and the second computing device; and
update a latency table to include the latency between the first computing device and the second computing device, wherein the latency table indicates a plurality of latencies, each latency of the plurality of latencies corresponding to a pair of computing devices of the plurality of computing devices.

3. The system of any of claims 1-2, wherein the forward packet represents a first forward packet, wherein the reverse packet represents a first reverse packet, and wherein the processing unit is configured to:
identify information indicative of a second forward packet;
compute, based on a third time corresponding to the second forward packet and a fourth time corresponding to a second reverse packet associated with the second forward packet, a latency between the first computing device and a third computing device, wherein the third computing device includes a destination of the second forward packet and a source of the second reverse packet; and
output information indicative of the latency between the first computing device and the third computing device.

4. The system of any of claims 1-3, wherein to identify the information indicative of the forward packet, the processing unit is configured to:
identify a source internet protocol, IP, address and a destination IP address in a header of a packet received at the NIC; and
determine, based on a source IP address and a destination IP address, that the packet represents the forward packet.

5. The system of any of claims 1-4, wherein based on identifying the information indicative of the forward packet, the processing unit is configured to:
create a flow structure indicating information corresponding to the reverse packet associated with the forward packet; and
create a timestamp corresponding to a time in which the forward packet departs the first computing device for the second computing device, wherein the first time is based on the time.

6. The system of claim 5, wherein the NIC is configured to output, via the set of interfaces to the second computing device, the forward packet, and wherein the processing unit is further configured to:
identify information indicative of a packet received by the set of interfaces;
determine, based on the flow structure, that the packet represents the reverse packet associated with the forward packet;
identify a time corresponding to an arrival of the reverse packet at the set of interfaces; and
determine, based on the timestamp corresponding to the time in which the forward packet departs the set of interfaces and the time corresponding to the arrival of the reverse packet at the set of interfaces, the latency between the first computing device and the second computing device.

7. The system of any of claims 1-6, wherein the processing unit is configured to determine, based on the information indicative of the forward packet, that the forward packet represents at least one packet type of a set of packet types configured within the processing unit as useful for determining latencies.

8. The system of claim 7, wherein the at least one packet type indicates that the forward packet is configured for prompting an immediate reverse packet from the second computing device so that a difference between the first time and the second time represents a round trip time between the first computing device and the second computing device.

9. The system of any of claims 7-8, wherein to determine that the forward packet represents the at least one packet type of the set of packet types, the processing unit is configured to:
determine that the forward packet includes at least one Transmission Control Protocol, TCP, packet flag of a set of TCP packet flags, wherein the set of TCP packet flags include the synchronize, SYN, TCP packet flag, the urgent, URG, TCP packet flag, and the push, PSH, TCP packet flag.

10. The system of any of claims 1-9, wherein to determine that the forward packet represents the at least one packet type of the set of packet types, the processing unit is configured to determine that the forward packet is an internet control message protocol, ICMP, packet or an address resolution protocol, ARP, packet.

11. A method comprising:
identifying, by a processing unit of a network interface card, NIC, of a first computing device, information indicative of a forward packet, wherein the NIC includes a set of interfaces, and wherein the set of interfaces is configured to receive one or more packets and send one or more packets;
computing, by the processing unit based on a first time corresponding to the forward packet and a second time corresponding to a reverse packet associated with the forward packet, a latency between the first computing device and a second computing device, wherein the second computing device includes a destination of the forward packet and a source of the reverse packet; and
outputting, by the processing unit, information indicative of the latency between the first computing device and the second computing device.

12. The method of claim 11, further comprising:
receiving, by a controller, the information indicative of the latency between the first computing device and the second computing device, wherein a plurality of computing devices includes the first computing device and the second computing device; and
updating, by the controller, a latency table to include the latency between the first computing device and the second computing device, wherein the latency table indicates a plurality of latencies, each latency of the plurality of latencies corresponding to a pair of computing devices of the plurality of computing devices.

13. The method of any of claims 11-12, wherein the forward packet represents a first forward packet, wherein the reverse packet represents a first reverse packet, and wherein the method further comprises:
identifying, by the processing unit, information indicative of a second forward packet;
computing, by the processing unit based on a third time corresponding to the second forward packet and a fourth time corresponding to a second reverse packet associated with the second forward packet, a latency between the first computing device and a third computing device, wherein the third computing device includes a destination of the second forward packet and a source of the second reverse packet; and
outputting, by the processing unit information indicative of the latency between the first computing device and the third computing device.

14. The method of any of claims 11-13, wherein identifying the information indicative of the forward packet comprises:
identifying, by the processing unit, a source internet protocol, IP, address and a destination IP address in a header of a packet received at the NIC; and
determining, by the processing unit based on a source IP address and a destination IP address, that the packet represents the forward packet.

15. A computer-readable medium comprising instructions for causing a processing unit of a network interface card, NIC, of a first computing device to:
identify information indicative of a forward packet;
compute, based on a first time corresponding to the forward packet and a second time corresponding to a reverse packet associated with the forward packet, a latency between the first computing device and a second computing device, wherein the second computing device includes a destination of the forward packet and a source of the reverse packet; and
output information indicative of the latency between the first computing device and the second computing device.
